# EUROPEAN PATENT SPECIFICATION

(11) **EP 0 312 943 B1**
(45) Date of publication and mention of the grant of the patent: **23.03.1994**
(21) Application number: 88117189.6
(22) Date of filing: 15.10.1988
(51) Int. Cl.: B01D 71/00, B01D 71/12, B01D 71/14, B01D 53/22

(54) **Cellulose acetate butyrate gas separation membranes**
Celluloseacetatbutyrat-Membranen zur Trennung von Gasen
Membranes de séparation de gaz en acéto-butyrate de cellulose

(30) Priority: 19.10.1987 US 109648
(43) Date of publication of application: 26.04.1989
(73) Proprietor: W.R. Grace & Co.-Conn., New York, New York 10036 (US)
(72) Inventor: Minhas, Bhupender Singh, Columbia, MD 21045 (US)
(74) Representative: UEXKÜLL & STOLBERG

(56) References cited:
- EP-A- 0 214 360
- US-A- 3 593 855
- US-A- 3 607 329
- US-A- 4 746 475
- US-E- 27 280

## Description

### FIELD OF THE INVENTION

This invention relates to gas separation membranes, and more particularly, to providing a gas separation membrane of improved performance.

### BACKGROUND OF THE INVENTION

The use of membranes for gas separation is becoming increasingly more common. In these systems, a mixture of gases under relatively high pressure are passed across the surface of a membrane adapted to act as a selective barrier, permitting some components of the gas mixture to pass through more readily than others. The separation of gases in these processes is generally due to molecular interaction between the gaseous components of the feed stream and the membrane. Because different components interact differently with the membrane, their permeation rates through the membrane are different, and substantial separation of components can be effected. While a certain selective effect can result from free molecular diffusion through membrane pores, especially in applications where small gas molecules such as hydrogen and helium are components of a gas mixture, membrane separation is often considered to proceed principally by the sorption of a gaseous component on the feed side of the membrane, diffusion of that component through the membrane, and desorption of the component from the permeate side of the membrane. Membranes used for gas separation processes wherein the separation mechanism is controlled principally by solubility and diffusivity, as opposed to free molecular diffusion, are classified as nonporous membranes. While these nonporous membranes may in fact have small "pores", they are typically produced in a carefully regulated manner to provide a dense layer which effectively controls the gas transfer in the system. The structure of this dense control layer is often crucial to membrane performance, and it can be adversely affected by such factors as moisture, chemical degradaton, or physical deformation.

Gas transfer through nonporous membranes is dependent upon the membrane surface area, the pressure differential across the membrane, the diffusion rate of the gaseous components, and the effective thickness of the membrane. Generally, the membrane layer through which the gases must diffuse should be as thin as possible in order to obtain the maximum rate of gaseous diffusion. However, the membrane thinness is limited by a need to have a membrane free from defects, such as pinholes, and the need to have a membrane which has the physical integrity to withstand pressures as high as about 27580 kPa (4,000 pounds per square inch-gauge (psig)) across the membrane. For example, asymmetric cellulose ester membranes can be produced which do have a very thin but dense (nonporous) layer and a supporting sublayer of larger pore size. The thin dense layer basically controls the mass transfer in the system, and the thicker sublayer provides a degree of structural integrity. Many types of membranes, including cellulose esters and polymeric membranes, such as silicate rubber, polyethylene and polycarbonate, may be employed in gas separation. However, the particular membrane used can depend upon the separation sought to be effected.

Commerical gas separation processes are generally continuous processes in which a feed gas stream is brought into contact at the feed side of a membrane. The pressure on the feed side of the system is maintained at a pressure sufficiently higher than the pressure on the permeate side of the membrane to provide a driving force for the diffusion of the most permeable components of the gaseous mixture through the membrane. The partial pressure of the more permeable gaseous components is also maintained at a higher level on the feed side of the membrane than on the permeate side by constantly removing both the permeate stream and the residue of the feed stream from contact with the membrane. While the permeate stream can represent the desired product, in most gas permeation processes the desired product is the residue stream, and the permeate stream consists of contaminants which are removed from the feed stream.

For example, CO₂ and H₂S can be removed from a hydrocarbon mixture, such as natural gas, using a thin dried supported cellulose ester membrane, and a differential pressure across the membrane of about 689 kPa (100 psi). The partial pressures of CO₂ and H₂S in the permeate stream are preferably kept at about 80 percent or less of the partial pressure of those same components in the feed stream by separately and continuously removing the depleted feed gas (residue) stream and the permeate stream from contact with the membrane. The residue stream can, of course, be fed to another gas separation membrane stage, and the permeate gas stream can likewise be fed to another separation stage to produce a product having a still higher concentration of the more permeable products. In fact, the use of multiple separation steps in series and/or in parallel offers considerable diversity in separation alternatives using membrane technology so long as sufficient pressures can be maintained in the system.

Feed stream pressures can vary from 69 to 27580 kPa (10 to 4,000 psig), but are generally within the range of about 3447 to 20684 kPa (500 psig to about 3,000 psig). The differential pressure across the membrane can be as low as about 69 kPa (10 pounds per square inch (psi)) or as high as about 14479 kPa (2,100 psi) depending on many factors, such as the particular membrane used, the flow rate of the inlet stream, and the availability of a compressor to compress the permeate stream, if such compression is desired. A differential pressure of at least 689 kPa (100 psi) is preferred since lower differential pressure may require more modules, more time, and compresssion of intermediate product streams of modules arranged in series. Differential pressures of 8274 kPa (1,200 psi) or less are also generally preferred since the useful life of membranes is generally greater.

Spiral wound membrane arrangements are becoming more commonly used in commercial gas separation processes. An advantage of using a spiral wound technique is that this affords a large membrane contact area while permitting a rather small overall containment vessel. A standard way of supplying spiral wound membranes for commercial use is in the form of membrane units which comprise a section of permeate conduit around which the membrane is wound. These membrane units may then be used singly or joined together in series by interconnecting their permeate conduit sections. The usual way to use spiral wound membrane units is to contain them, either singly or multiply in modules. The modules can then in turn be used singly or can be conveniently interconnected in series or parallel arrangements to provide the desired treatment.

For many years cellulose ester membranes have been employed in liquid separation systems, such as reverse osmosis processes for the desalination of water, as well as in gas separation processes. Membraneous materials have been produced from various esters, including cellulose acetate, cellulose diacetate, cellulose triacetate, cellulose propionate, cellulose butyrate, cellulose cyanoethylate, cellulose methacrylate, and certain mixtures thereof. Cellulose acetate esters have become particularly favored for producing asymmetric nonporous membranes for gas separation. Such membranes comprise a dense nonporous layer which overlies a more porous layer; and can be cast on cloth from solution, then heat treated, and then dried, typically using a solvent exchange procedure intended to remove water. Free standing membranes can be prepared by casting on a non-adhesive material (eg. silicone-coated paper), and then separating the membrane from that material after it has gelled, but prior to heat treatment and drying. While free standing membranes have generally exhibited satisfactory performance, they are generally considered too fragile for commercial applications. Drying is necessary for application to gas separation, but simple evaporation of water can cause shrinkage and a loss of the membrane's asymmetric character. The solvent exchange procedure thus serves to prevent the membrane from shrinkage and loss of performance.

Although cellulose acetate esters have shown considerable utility for various gas separation applications, they are not without disadvantages. They are relatively brittle in the dry state, and thus, their dependability over the long term may be affected by system disorders, particularly while adverse system pressure fluctuations are experienced. Moreover, even under normal operation, these membranes frequently exhibit a decline in permeation rates over time, particularly if there is a high moisture content.

In an effort to develop membranes with improved flexibility over cellulose acetate membranes, cellulose acetate butyrate membranes, both with and without heat treatment, have been studied for gas separation systems. Cellulose acetate butyrate membranes, like cellulose acetate membranes, had a history of use in liquid systems where they exhibited relatively favorable selectivity for a variety of inorganic and organic solutes. These membranes have been cast from a variety of formulations. However, heat treatment of cellulose acetate butyrate membranes above about 50°C, as typically used for cellulose acetate membranes, was generally avoided because it could substantially reduce performance of the butyrate membrane. Reference is made to US-A-3,607,329 as an example of such membranes. Cellulose acetate butyrate membranes have in the past generally been considered poor performers when compared to the cellulose acetate membranes.

The useful life of gas separation membranes, including in particular spiral wound membranes, has not been entirely predictable. Various factors are believed to affect the performance of membranes over time. These include the normal operating pressure differentials, the character of the gas being treated, the quality of the membrane itself and system disorders to which the membrane is subjected. Membranes can also degrade naturally over time. A continuing challenge for those seeking to use gas separation membrane systems has been to improve the reliability of membrane systems, especially by prolonging the useful life of the membranes used therein.

One particular application of gas separation membranes is for separation of ammonia plant purge gases to provide a suitable hydrogen stream for reuse in ammonia synthesis. However, many membranes have proven to be adversely affected by the presence of ammonia in the purge gases. This necessitates pretreatment of the purge gases to remove ammonia.

### SUMMARY OF THE INVENTION

It has now been found that suitable cellulose acetate butyrate-based gas separation membranes can be prepared by forming a casting solution comprising from about 10% to about 30% of certain cellulose acetate butyrate polymers, from about 35% to about 75% of polymer solvent selected from the group consisting of acetone, triethylphosphate, dioxane, and mixtures thereof, and from about 2% to about 40% of at least one pore-forming agent selected from the group consisting of formamide, maleic acid, n-propanol, glycerol, formic acid, pyridine, and water; casting the membrane by coating a substantially flat support surface with a film of the casting solution, preferably from about 3 to about 508 µm (20 mils) thick; forming a dense layer on the exposed film surface by evaporating the polymer solvent in a substantially dry environment for about 10 to about 80 seconds at a temperature of about 15 to about 35°C; gelling the film in water at a temperature of about 0°C to about 15°C; and washing the resultant membrane with an effective amount of a washing liquid, preferably water, suitable for removing the remaining polymer solvent and the pore forming agents therefrom. Then the membrane is dried by solvent exchange. There is generally no need for annealing (i.e. heating to at least about 65°C before drying) of membranes prepared and used in accordance with this invention. The preferred solvent exchange technique comprises two steps: the first using alcohol to replace water; and the second using a non-polar volatile liquid to replace the alcohol. The volatile liquid is then evaporated to obtain the dry membrane.

The casting solution is preferably filtered, for example, through a seven µm filter and/or allowed to stand quiescently, prior to casting so that air bubbles or other materials entrained in the solution can be substantially precluded from the cast film.

Cellulose acetate butyrate membranes such as those of this invention have been found to be resistant to ammonia and are thus considered particularly useful for separating gases, such as ammonia plant purge gases, which contain ammonia.

### BRIEF DESCRIPTION OF THE DRAWING:

In the drawings:
Fig. 1 is a schematic representation of an ammonia synthesis process employing gas membrane separation of purge gases.
Fig. 2 is a plot of the total flux passing through membranes tested under the various conditions hereinafter described, as a function of time.

### DETAILED DESCRIPTION

In accordance with this invention, a cellulose acetate butyrate membrane casting solution is formed comprising by weight from about 10% to about 30% cellulose acetate butyrate polymer; from about 35% to about 75% polymer solvent selected from the group consisting of acetone, triethylphosphate, dioxane and mixtures thereof; from about 2% to about 40%, preferably between about 15% and about 30%, of at least one pore-forming agents selected from the group consisting of formamide, maleic acid, n-propanol, glycerol, formic acid, pyridine and water. The cellulose acetate butyrate polymer used in the casting solution may be generally represented by the formula: 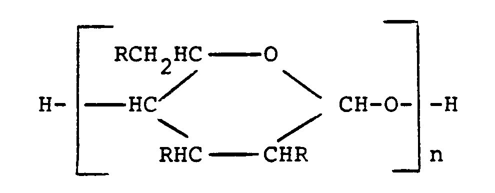
wherein each R in the polymer is independently selected from the group consisting of -OH (i.e. hydroxyl), -OOCCH₃ (i.e. acetate), and -OOCCH₂CH₂CH₃ (i.e. butyrate) such that the weight percent of butyryl groups (i.e. -OCCH₂CH₂CH₃) in the polymer is from about 10 to about 45, preferably from about 15 to 40 weight percent; the weight percent of acetyl groups (i.e. -OCCH₃) in the polymer is from about 2 to about 35, preferably from about 10 to about 30 weight percent; and the weight percent of hydroxyl groups in the polymer is from about 0.8 to about 2, preferably from about 1.5 to about 1.8 weight percent; and wherein n is chosen such that the number average molecular weight of the cellulose acetate butyrate polymer is at least about 20,000, preferably about 40,000 or more, most preferably 60,000 or more, and preferably 250,000 or less, and most preferably 70,000 or less. An example of suitable cellulose acetate butyrate is available commercially in powdered form as CAB 171-15S from Eastman Chemicals of Kingsport, Tennessee. The casting solution can be prepared simply by dissolving the cellulose acetate butyrate and the pore forming agent in the solvent. This can generally be done at room temperature using a conventional mixer.

The preferred solvents are acetone and dioxane, with acetone being the most preferred. The preferred pore forming agents are formamide, maleic acid, n-propanol, glycerol, and formic acid with the most preferred agent being a mixture of formamide and maleic acid in a weight ratio of formamide to maleic acid of between about 4:1 and about 1:1, preferably about 2:1. The most preferred casting solutions are thus substantially water-free.

One type of preferred casting solution consists essentially of cellulose acetate butyrate, acetone, formamide and maleic acid. A particulary preferred casting solution comprises from about 16% to about 26%, most preferably about 24%, cellulose acetate butyrate; from about 40% to about 60%, most preferably about 47.5% polymer solvent, preferably acetone; and from about 15% to about 30% pore forming agent, preferably a combination consisting of from about 5% to about 25%, most preferably about 19%, formamide together with from about 5% to about 25%, most preferably about 9.5%, maleic acid.

The casting solution is preferably filtered to remove solids which might otherwise interfere with membrane integrity. A seven µm filter is generally suitable. It is also preferred to allow the solution to stand quiescently to allow unfiltered solids to settle and to allow entrained gas bubbles to escape. Generally, this may be suitably accomplished by simply storing the solution for about 4 to about 24 hours at room temperature (i.e. 20°C to 25°C).

In any case, the membrane is cast by coating a substantially flat support surface with a film of the casting solution. The support surface may be one such as glass or coated paper which is used only during formation and is separated from the formed membrane; but normally, the support surface will be a porous material such as polyamide fabric which can be used to strengthen the finished membrane after formation and during use. The thickness of the film may vary considerably since the dense layer, which will substantially control the permeability, is considered to form primarily on an exposed surface, rather than thickness basis, and since the thickness may depend upon the composition and viscosity of the casting solution. Nevertheless, a film thickness of from about 76,2-508 µm (3 mils to 20 mils) thick is generally preferred for casting solutions of this invention to achieve a relatively strong membrane which can be conveniently incorporated into gas separation apparatus. Film thicknesses between about 203-406 µm (8 mils and 16 mils) are most preferred.

After the casting solution is cast onto said support surfaces, the polymer solvent is evaporated from the film in a substantially dry environment for about 10 to about 80 seconds, preferably from about 10 to about 30 seconds, most preferably about 18 seconds at a temperature of about 15°C to about 35°C. During this evaporation process, the dense (i.e. nonporous) layer is formed at the exposed film surface (i.e. the film surface remote from the support surface). The preferred manner of evaporation comprises passing relatively clean and dry air over the film at the desired temperature.

Following formation of the nonporous layer the film is gelled at a temperature of from about 0°C to about 15°C, preferably at about 2°C or less, and then washed to substantially remove the remaining polymer solvent, thereby establishing an integrity to the structure of the membrane. Gelling can be conveniently accomplished by immersing the film in an ice-cooled water bath. The washing also substantially removes the pore forming agents, thereby forming pores in the layer which underlies the dense layer formed during solvent evaporation as described above. The preferred washing liquid is also water, but the wash water should then be removed in order to provide a suitable gas separation membrane. Inasmuch as direct evaporation of water from the membrane structure can adversely affect the performance of gas separation membranes, the membrane is therefore dried by solvent exchange. The preferred solvent exchange steps comprise first using an alcohol, most preferably one selected from the group consisting of methanol, ethanol, propanol, and butanol, to replace water in the membrane, and then using a non-polar volatile liquid most preferably one selected from the group consisting of pentane, hexane, heptane, benzene, toluene, and carbon disulfide, to replace the alcohol. The volatile liquid may then be evaporated as, for example, by passing air at a temperature between about 15°C and 35°C over one membrane to obtain the dry membrane suitable for use in gas separation. Membranes prepared in accordance with this invention can be used effectively without requiring an additional step of heat annealing the membrane at a temperature of at least about 65°C, for example, at about 75°C to about 90°C prior to drying. Indeed, membranes are preferably prepared in accordance with this invention without exposing the cast film or the membrane to temperatures of about 50°C or above prior to drying.

Preparation of membranes in accordance with this invention will become further apparent from the following non-limiting examples.

### EXAMPLE I

A casting solution of about 23.8 weight percent cellulose acetate butyrate (Eastman Chemicals, CAB 171-15S), 47.6 weight percent acetone, 19.1 weight percent formamide, and 9.5 weight percent maleic acid was prepared and filtered through a seven µm filter. The solution was stored at room temperature (i.e. about 23°C) over night (i.e., about 12 hours). A 254 µm (10 mil) thin solution film was coated on top of a flat support of polyamide fabric about 127 µm (5 mils) thick. The acetone was evaporated from the film for about 17.5 seconds in a dry environment having a temperature of about 25°C. The film was gelled to form the membrane by immersing it with its fabric support in an ice cold water tank (i.e., about 2°C). The membrane was then washed with water at room temperature to remove residual solvent and the pore forming agents, solvent exchanged first with isopropyl alcohol and then with hexane, and the hexane was then evaporated by dry air at a temperature of about 25°C to obtain a dry membrane which with the polyamide fabric support had a thickness of about 262 µm (10.3 mils). A membrane obtained in this manner, without annealing, exhibited a carbon dioxide permeability of about 30,51 dm³/Std./m² (11.6 SCFH/ft² (standard cubic feet per hour per square foot)) per 689 kPa (100 psi) differential pressure, a methane permeability of about 0.71 dm³/Std/m² (0.27 SCFH/ft²) per 689 kPa (100 psi) differential pressure, and thus a separation factor for CO₂/CH₄ of about 43.

The cellulose acetate butyrate used in this example has a number average molecular weight reported as about 65,000, a butyryl content reported as about 17 weight percent, an acetyl content reported as about 29.5 weight percent, and a hydroxyl content reported as about 1.5 weight percent. In contrast, a similar procedure using cellulose acetate butyrate having a number average molecular weight reported as about 40,000, a butyryl content reported as about 50%, an acetyl content reported as about 5%, and a hydroxyl content reported as about 0.5 weight percent could not be formed into a membrane.

### EXAMPLE II

A membrane was prepared as in Example I, except that the coating solution had about 20.0 weight percent cellulose acetate butyrate, 45.0 weight percent acetone, 25.0 weight percent triethylphosphate, 6.0 weight percent n-propanol, 2.0 weight percent glycerol, and 2.0 weight percent water. The resultant membrane had a total thickness (with support) of about 282 µm (11.1 mils) and exhibited a carbon dioxide permeability of about 67,33 dm³/Std/m² (25.6 SCFH/ft²) per 689 kPa (100 psi) differential pressure a methane permeability of about 4,94 dm³/Std/m² (1.88 SCFH/ft²) per 689 kPa (100 psi) differential pressure, and thus a separation factor for CO₂/CH₄ of about 14.

### EXAMPLE III

A membrane was prepared as in Example I, except that the coating solution had about 19.8 weight percent cellulose acetate butyrate, 44.6 weight percent acetone, 24.7 weight percent triethylphosphate, 5.9 weight percent n-propanol, 2.0 weight percent glycerol, and 3.0 weight percent water. The resultant membrane had a total thickness (with support) of about 323 µm (12.7 mils) and exhibited a carbon dioxide permeability of about 68,64 dm³/Std/m² (26.1 SCFH/ft²) per 689 kPa (100 psi) differential pressure, a methane permeability of about 7,57 dm³/Std/m² (2.88 SCFH/ft²) per 689 kPa (100 psi) differential pressure, and thus a separation factor for CO₂/CH₄ of about 9.

### EXAMPLE IV

A membrane was prepared as in Example I, except that the coating solution had about 20.0 weight percent cellulose acetate butyrate, 47.0 weight percent acetone, 20.0 weight percent triethylphosphate, 6.0 weight percent n-propanol, 2.0 weight percent glycerol, and 5.0 weight percent pyridine. The resultant membrane had a total thickness (with support) of about 284 µm (11.2 mils) and exhibited a carbon dioxide permeability of about 72,85 dm³/Std/m² (27.7 SCFH/ft²) per 689 kPa (100 psi) differential pressure, a methane permeability of about 4,66 dm³/Std/m² (1.77 SCFH/ft²) per 689 kPa (100 psi) differential pressure, and thus a separation factor for CO₂/CH₄ of about 16.

### EXAMPLE V

A membrane was prepared as in Example I, except that the coating solution had about 22.0 weight percent cellulose acetate butyrate, 44.0 weight percent acetone, 24.0 weight percent triethylphosphate, 6.0 weight percent n-propanol, 2.0 weight percent glycerol, and 2.0 weight percent formic acid. The resultant membrane had a total thickness (with support) of about 292 µm (11.5 mils) and exhibited a carbon dioxide permeability of about 47,87 dm³/Std/m² (18.2 SCFH/ft²) per 689 kPa (100 psi) differential pressure, a methane permeability of about 1,89 dm³/Std/m² (0.72 SCFH/ft²) per 689 kPa (100 psi) differential pressure, and thus a separation factor for CO₂/CH₄ of about 25.

### EXAMPLE VI

A membrane was prepared as in Example I, except that the cold water tank in which the membrane was gelled had a temperature of about 11°C. The resultant membrane had a total thickness (with support) of about 246 µm (9.7 mils) and exhibited a carbon dioxide permeability of about 36,03 dm³/Std/m² (13.7 SCFH/ft²) per 689 kPa (100 psi) differential pressure a methane permeability of about 3,87 dm³/Std/m² (1.47 SCFH/ft²) per 689 kPa (100 psi) differential pressure, and thus a separation factor for CO₂/CH₄ of about 9.

### EXAMPLE VII

A membrane was prepared as in Example I, except that the membrane was annealed at a temperature of about 90°C for about 20 minutes before drying. The resultant membrane had a total thickness (with support) of about 264 µm (10.4 mils) and exhibited a carbon dioxide permeability of about 27,88 dm³/Std/m² (10.6 SCFH/ft²) per 689 kPa (100 psi) differential pressure, a methane permeability of about 0,68 dm³/Std/m² (0.26 SCFH/ft²) per 689 kPa (100 psi) differential pressure, and thus a separation factor for CO₂/CH₄ of about 41.

Membranes prepared in accordance with this invention exhibit a surprising stability over time with respect to flux (i.e. total gas permeation rate through a given area of membrane) where they are used to separate a feed gas stream comprising a mixture of gases into a gas permeate fraction which passes through the membrane and is relatively rich in at least one of the gases in the feed mixture, and a residual fraction which does not pass through the membrane and is relatively rich in at least one of the other gases of the feed mixture. The membranes are generally considered effective in gas systems which are not supersaturated with water. However, where caustic gases such as ammonia are present, the gases should be moisture-free. The stability of these membranes and their ability to treat gases such as ammonia, at least in the absence of water vapor, are particularly valuable attributes when using such a membrane in a substantially steady state process involving the substantial separation of at least one gas in a gaseous mixture, preferably a mixture containing ammonia, from at least one other gas in the mixture by selective permeation. A preferred use is for hydrogen separations, from feed gases which comprise hydrogen and at least one other gas such that the permeate fraction contains a higher mole percentage of hydrogen than the feed gas, and particularly for gas separation processes such as hydrogen recovery from process gas streams in ammonia plants which are essentially free of moisture.

In one application, cellulose acetate butyrate membranes can be used to achieve relatively stable hydrogen separation from a purge gas stream in an ammonia plant. Such purge gas streams typically comprise hydrogen and nitrogen as well as other components, some of which may be detrimental to the ammonia synthesis process; and it is desirable to recover a hydrogen-rich permeate fraction for reuse in ammonia synthesis, and to obtain for disposal a residual fraction which is depleted in hydrogen relative to the purge gas fed to the membrane, and which preferably contains significant amounts of any purge gas components detrimental to ammonia synthesis. For example, methane may be present in the purge gases, and although it may not adversely affect the ammonia synthesis catalysts employed, its build-up would depress the hydrogen and nitrogen partial pressures, and therefore reduce the efficiency of ammonia production. It is thus desirable to concentrate methane in the residual fraction for removal from the ammonia synthesis process.

The purge gases in ammonia synthesis also typically contain some ammonia and are essentially free of water vapor. The membranes of this invention are considered relatively resistant to ammonia in the absence of water vapor, and can be used in certain instances to provide a permeate fraction which is relatively rich in ammonia as well as hydrogen. Other gases which might be present in ammonia plant process streams include, as stated above, methane, but typically such streams are substantially free of hydrocarbons having two or more carbon atoms per molecule.

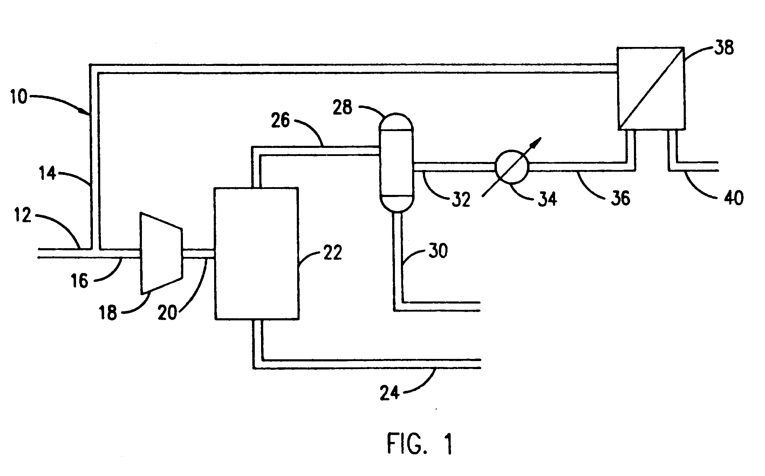

A particularly suitable application for cellulose acetate butyrate membranes will become further apparent by reference to the schematic drawing of Fig. 1 directed to a typical use of membrane separation for hydrogen recovery from purge gases in an ammonia synthesis plant. The overall process (10) comprises a feed gas inlet line (12) where the feed gases, principally nitrogen and hydrogen, are fed to the system. Often the feed gases are generated by reforming natural gas in the presence of air and substantially removing oxygen-containing byproducts (eg. carbon monoxide, carbon dioxide, and water). When reformed natural gas is used to produce the feed, the feed gas stream will contain methane in addition to hydrogen and nitrogen, as well as minor amounts of argon. In any case, the feed gas stream is mixed with the hydrogen-rich recycled gas stream from recycle line (14) and fed through mixed feed line (16) to a compressor (18). The compressed mixed feed is then fed through line (20) into an ammonia synthesis loop shown schematically as (22). The synthesis loop may contain various stages, but results in ammonia product, which is recovered and a purge gas which may be partially reused or removed from the system. In Fig. 1, the ammonia products recovered through a product line (24) and the purge gas which is directed through purge gas line (26). Purge gas in ammonia synthesis typically contains hydrogen and nitrogen, as well as minor amounts of ammonia and argon and, where reformed natural gas is used to produce the feed, methane is also generally present.

For many membrane systems even minor amounts of ammonia (say more than about 0.02 percent) have been found detrimental to the membrane structure even in the absence of water vapor, and purge gases with ammonia partial pressures of 6,9 kPa (1 psi) or less can thus be of concern. In these instances, a purge gas water scrubber such as that shown in Fig. 1 as (28) may be provided to substantially remove the residual purge gas ammonia as an aqueous solution of ammonia. In Fig. 1, the ammonia solution is recovered through solution line (30). The scrubbed purge gases are then typically directed through a purge gas line as shown at (32) to a heat exchanger as shown at (34) where the stream is heated to reduce its relative humidity. The heated purge gas stream may then be directed, through membrane separator unit inlet line (36), to the membrane separator unit (38). The separator unit separates the gas into gases which are relatively permeable such as hydrogen, and gases which have low permeability, such as methane and nitrogen. The low permeability gases are removed from the system through residual line (40), while the permeated gases are recycled for reuse through recycle line (14).

While cellulose acetate butyrate membranes can be used advantageously in the membrane separator unit (38) of the process shown in Fig. 1, the membranes of this invention have been found particularly resistant to ammonia, and are considered suitable for directly treating the purge gases from the ammonia synthesis loop (22), especially where the ammonia partial pressure is about 448 kPa (65 psi) or less. In other words, the costly steps of scrubbing the purge gases and heating the scrubbed purge gases to lower the relative humidity can be eliminated, and the purge gases (i.e. the gases from purge gas line (26)) can be directed to the membrane separator unit inlet line (36) without scrubbing or otherwise pretreating the purge gases to remove ammonia gas therefrom. The temperature of the purge gases from the ammonia synthesis loop are typically relatively low, often below 0°C, and the pressure of the gases can vary considerably. In any case, the temperature of the purge gases containing the cellulose acetate butyrate membrane should generally be below about 65°C, preferably below about 45°C, and the pressure drop across the membrane (i.e. the differential pressure) should generally be about 14479 kPa (2100 psi) or less, preferably about 8274 kPa (1200 psi) or less.

Use of the membranes in accordance with this invention will become further apparent from the following non-limiting examples.

### EXAMPLE VIII

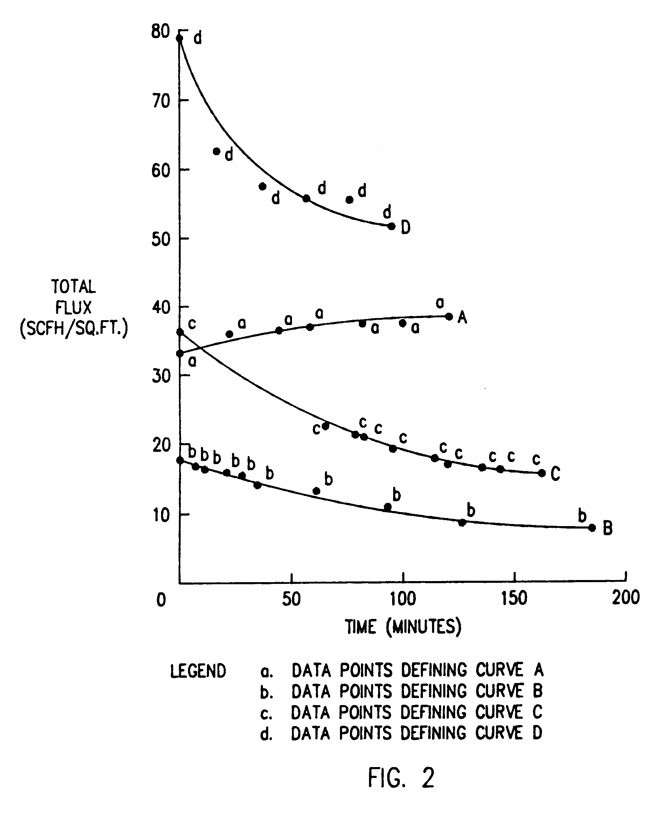

A membrane prepared in accordance with Example No. I was tested in a laboratory apparatus wherein a feed gas blend having a composition generally representative of ammonia plant purge gas (the mole fractions of hydrogen, ammonia, nitrogen, and methane being respectively about 0.668, 0.061, 0.117, and 0.094) was passed to a membrane unit employing a flat sheet of the membrane and separated therein into a permeate stream and a residual stream. Means were provided for maintaining the feed pressure and permeate pressure, and for measuring the permeate flow rate and composition. The feed pressure was held at about 7481 kPa (1085 psig (pounds per square inch gauge)), the pressure of the permeate stream was held at about 2068 kPa (300 psig), and the temperature was held at about 55°C. The ammonia partial pressure in the feed was thus about 455 kPa (66 psig). The flux (i.e. gas flow) through the membrane as a function of time is shown in Curve A of Fig. 2.

A comparison of the permeate composition and permeabilities (in standard cubic feet of the component permeating through square foot of membrane surface area per hour, per 689 kPa (100 psi) drop in the partial pressure of the component across the membrane) after about ten minutes and after about two hours is given below in Table A.

**TABLE A**

| Component | Permeate Mole Fraction | | Permeability dm³/Std/m² - 689 kPa (SCFH/ft²-100 psi) | |
|---|---|---|---|---|
| | 10 minutes | 2 hours | 10 minutes | 2 hours |
| Hydrogen | 0.787 | 0.789 | 15.20 (5.78) | 16.57 (6.30) |
| Ammonia | 0.131 | 0.127 | 46.63 (17.73) | 53.81 (20.46) |
| Nitrogen | 0.048 | 0.048 | 2.08 (0.79) | 2.08 (0.79) |
| Methane | 0.034 | 0.035 | 2.76 (1.05) | 3.23 (1.23) |

The gas flow through the membrane (i.e. the permeate flow) was about 87,84 dm³/Std/m² (33.4 SCFH/ft²) after ten minutes and about 95,21 dm³/Std/m² (36.2 SCFH/ft²) after two hours.

The performance of the membranes of this invention as demonstrated in Example VIII can be compared to the performance of a thin film solution cast cellulose acetate/cellulose triacetate (hereinafter "CA/CTA") membrane which is considered representative of membranes generally used in gas separation. The heat annealed CA/CTA membrane of about 177 - 304 µm (7 to 12 mils) in thickness was obtained from Grace Membrane Systems of Houston, Texas and was tested as outlined in the following Examples IX-XI.

### EXAMPLE IX

The CA/CTA membrane was tested in the laboratory apparatus of Example VIII. A feed gas blend (mole fractions of hydrogen, ammonia, nitrogen, and methane being respectively 0.600, 0.061, 0.1672, and 0.1718) was passed to a membrane unit employing a flat sheet of the membrane at a pressure of about 6895 kPa (1000 psig) (i.e. an ammonia partial pressure of about 421 kPa (61 psig)). The pressure of the permeate stream was held at about, 2758 kPa (400 psig), and the temperature was held at about 24°C. The flux through the membrane as a function of time is shown in Curve B of Fig. 2.

A comparison of the permeate composition and the permeabilities after about 30 minutes and after about three hours is given below in Table B.

**TABLE B**

| Component | Permeate Mole Fraction | | Permeability dm³/Std/m² - 689 kPa (SCFH/ft²-100 psi) | |
|---|---|---|---|---|
| | 30 minutes | 3 hours | 30 minutes | 3 hours |
| Hydrogen | 0.795 | 0.795 | 11.94 (4.54) | 6.47 (2.46) |
| Ammonia | 0.105 | 0.095 | 24.80 (9.43) | 9.57 (3.64) |
| Nitrogen | 0.039 | 0.045 | 0.97 (0.37) | 0.60 (0.23) |
| Methane | 0.061 | 0.066 | 1.55 (0.59) | 0.92 (0.35) |

The gas flow through the membrane (i.e. the permeate flow) was about 39,98 dm³/Std/m² (15.2 SCFH/ft²) after 30 minutes and about 21,57 dm³/Std/m² (8.2 SCFH/ft²) after three hours.

### EXAMPLE X

The CA/CTA membrane was tested in the laboratory apparatus of Example VIII. A feed gas blend (mole fractions of hydrogen, ammonia, nitrogen, and methane being respectively 0.602, 0.047, 0.174, and 0.177) was passed to a membrane unit employing a flat sheet of the membrane at a pressure of about 11721 kPa (1700 psig) (i.e. an ammonia partial pressure of about 552 kPa (80 psig)). The pressure of the permeate stream was held at about 2758 kPa (400 psig), and the temperature was held at about 24°C. The flux through the membrane as a function of time is shown in Curve C of Fig. 2.

A comparison of the permeate composition and the permeabilities after about one hour and after about two hours is given below in Table C.

**TABLE C**

| Component | Permeate Mole Fraction | | Permeability dm³/Std/m² - 689 kPa SCFH/ft²-100 psi | |
|---|---|---|---|---|
| | One hour | 2 hours | One hour | 2 hours |
| Hydrogen | 0.807 | 0.799 | 7.15 (2.72) | 5.39 (2.05) |
| Ammonia | 0.103 | 0.115 | 15.04 (5.72) | 14.68 (5.58) |
| Nitrogen | 0.037 | 0.034 | 0.74 (0.28) | 0.50 (0.19) |
| Methane | 0.053 | 0.051 | 1.03 (0.39) | 0.76 (0.29) |

The gas flow through the membrane (i.e. the permeate flow) was about 58,65 dm³/Std/m² (22.3 SCFH/ft²) after one hour and about 44,71 dm³/Std/m² (17.0 SCFH/ft²) after two hours.

### EXAMPLE XI

The CA/CTA membrane was tested in the laboratory apparatus of Example VIII. A feed gas blend (mole fractions of hydrogen, ammonia, nitrogen, and methane being respectively 0.614, 0.121, 0.193, and 0.072) was passed to a membrane unit employing a flat sheet of the membrane at a pressure of about 7481 kPa (1085 psig) (i.e. an ammonia partial pressure of about 903 kPa (131 psig)). The pressure of the permeate stream was held at about 2068 kPa (300 psig), and the temperature was held at about 57°C. The flux through the membrane as a function of time is shown in Curve D of Fig. 2.

A comparison of the permeate composition and the permeabilities after about five minutes and after about eighty minutes is given below in Table D.

**TABLE D**

| Component | Permeate Mole Fraction | | Permeability dm³/Std/m² - 689 kPa SCFH/ft²-100 psi | |
|---|---|---|---|---|
| | 5 minutes | 80 minutes | 5 minutes | 80 minutes |
| Hydrogen | 0.768 | 0.755 | 38.95 (14.81) | 27.48 (10.45) |
| Ammonia | 0.184 | 0.185 | 45.53 (17.31) | 33.11 (12.59) |
| Nitrogen | 0.031 | 0.039 | 3.00 (1.14) | 2.52 (0.96) |
| Methane | 0.017 | 0.021 | 4.42 (1.68) | 3.66 (1.39) |

The gas flow through the membrane (i.e. the permeate flow) was about 207,24 dm³/Std/m² (78.8 SCFH/ft²) after five minutes and about 144,76 dm³/Std/m² (55.04 SCFH/ft²) after 80 minutes.

In all of the Examples VIII through XI, the feed flow rate was kept sufficiently high to provide substantially constant mole fractions of the components on the feed side of the membrane. It is evident from a comparison of Examples VIII through XI that the membrane of this invention surprisingly exhibited relatively low variation in total flux over the time period given. This performance is further shown in Fig. 2 where the membrane of the invention shows a relatively steady flux, whereas in each of the Examples using CA/CTA membranes, the flux continued to drop with time. It is believed that the total flux through the CA/CTA membranes used in Examples IX, X, and XI would drop to near zero dm³/Std/m² (SCFH/ft²) within several days, while the total flux through the cellulose acetate butyrate would remain relatively constant over the same period. Moreover, as shown in Table A above, the permeate composition and the component permeabilities remained relatively constant. Thus, membranes of this invention are considered especially suitable for use where relatively stable performance is important, particularly in the presence of ammonia gas.

Without confining the invention to any theory of operation, it is believed that membranes produced in accordance with this invention exhibit superior resistance to attack by ammonia, especially relative to CA/CTA membranes. Indeed, the shrinkage for free standing membranes prepared in accordance with this invention and exposed to pure gaseous ammonia at 138 kPa (20 psi) and about 22°C for about 3 hours was about 1 percent, while shrinkage of CA/CTA membranes under the same conditions was about 6 percent.

The Examples describe various embodiments of the invention. Other embodiments will be apparent to those skilled in the art from a consideration of the specification or practice of the invention disclosed herein.

## Claims

1. A process of preparing an asymmetric membrane suitable for use in gas separation which comprises the steps of:
(a) forming a casting solution comprising by weight (i) from 10% to 30% of cellulose acetate butyrate polymer represented by the formula, 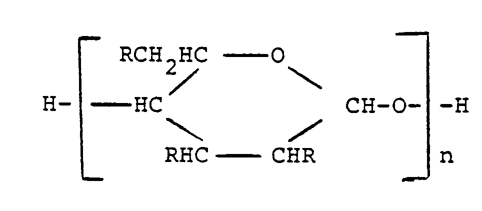 wherein each R in the polymer is independently selected from the group consisting of -OH, -OOCCH₃, and -OOCCH₂CH₂CH₃ such that the weight percent of -OCCH₂CH₂CH₃ groups in the polymer is 10 to 45, the weight percent of -OCCH₃ groups in the polymer is from 2 to 35, and the weight percent of -OH groups in the polymer is from 0.8 to 2, and wherein n is chosen such that the number average molecular weight of the polymer is at least 20,000; (ii) from 35% to 75% of polymer solvent selected from the group consisting of acetone, triethylphosphate, dioxane, and mixtures thereof; and (iii) from 2% to 40% of at least one, pore-forming agents selected from the group consisting of formamide, maleic acid, n-propanol, glycerol, formic acid, pyridine, and water;
(b) casting the membrane by coating a substantially flat support surface with a film of said casting solution;
(c) forming a dense layer on the exposed film surface by evaporating the polymer solvent in a substantially dry environment for 10 to 80 seconds at a temperature of 15°C to 35°C;
(d) gelling the film at a temperature of from 0°C to 15°C;
(e) washing the resultant membrane with an effective amount of a washing liquid suitable for substantially removing the remaining polymer solvent and pore forming agents from the membrane; and
(f) drying the membrane by solvent exchange without heat annealing the membrane at a temperature of at least 65°C prior to drying.

2. The process of claim 1 wherein the film of casting solution coated onto the support surface is from 203 to 406 µm (8 to 16 mils) thick.

3. The process of claims 1 or 2 wherein the washing liquid is water.

4. The process of claims 1 to 4 wherein the membrane is dried in that an alcohol is used to replace water in the membrane, a non-polar volatile liquid is then used to replace the alcohol, and the volatile liquid is then evaporated.

5. The process of claims 1 to 4 wherein the casting solution is filtered or is allowed to stand quiescently for at least 4 hours prior to coating it onto the support surface.

6. The process of claims 1 to 5 wherein the cellulose acetate butyrate has a number average molecular weight between 40,000 and 250,000.

7. The process of claims 1 to 6 wherein the butyryl group content of the polymer is from 15 to 40 weight percent.

8. The process of claims 1 to 7 wherein the acetyl group content of the polymer is from 10 to 30 weight percent.

9. The process of claims 1 to 8 wherein the hydroxyl group content of the polymer is from 1.5 to 1.8 weight percent.

10. The process of claims 1 to 9 wherein the polymer solvent is acetone.

11. The process of claims 1 to 10 wherein the pore forming agent is from a mixture of formamide and maleic acid in a weight ratio of formamide to maleic acid between 4:1 and 1:1.

12. The process of claims 1 to 11 wherein the casting solution is substantially water-free.

13. The process of claims 1 to 12 wherein the film is gelled by immersing itin water having a temperature of 2°C or less.

14. The process of claims 1 to 13 wherein the washing liquid is water and wherein the membrane is dried by a solvent exchange technique wherein an alcohol selected from the group consisting of methanol, ethanol, propanol and butanol is used to replace water in the membrane, a non-polar volatile liquid selected from the group consisting of pentane, hexane, heptane, benzene, toluene and carbon disulfide is used to replace the alcohol, and the volatile liquid is then evaporated.

15. The process of claims 1 to 14 wherein the casting solution is substantially water-free; and wherein the membrane is prepared without exposing the cast film or the membrane to temperatures of 50°C or above prior to drying.

16. The process of claim 15 wherein the polymer solvent is acetone; and wherein the pore forming agent is selected from formamide, maleic acid and mixtures thereof.

17. The process of claim 16 wherein the casting solution consists essentially of 16 to 26 weight percent cellulose acetate butyrate, from 40 to 60 weight percent acetone, from 5 to 25 weight percent formamide, and from 5 to 25 weight percent of maleic acid.

18. The process of claims 1 to 17 wherein the casting solution consists of 25 weight percent cellulose acetate buryrate, 47.5 weight percent acetone, 19 weight percent formamide, and 9.5 weight percent maleic acid.

19. The process of claims 1 to 18, wherein the cellulose acetate butyrate polymer has a number average molecular weight between 40,000 and 70,000; wherein the butyryl group content of the polymer is from 15 to 40 weight percent; and wherein the hydroxyl group content of the polymer is between 1.5 and 1.8 weight percent.

20. The process of claims 1 to 19, wherein the film cast during preparation of the membrane is gelled by immersing it in water having a temperature of 2°C or less.

21. Use of a gas separation membrane obtained by the process of claims 1 to 20 in a gas separation process for the separation of a feed gas stream comprising a mixture of gases into a gas permeate fraction which passes through the membrane and is relatively rich in at least one of the gases in the feed mixture, and a residual fraction which does not pass through the membrane and is relatively rich in at least one other gas of the feed mixture.

22. The use of claim 21, wherein the feed gas comprises hydrogen and at least one other gas and the permeate fraction contains a higher mole percentage of hydrogen than the feed gas.

23. The use of claims 21 or 22, wherein the feed gas is a purge gas stream in an ammonia plant comprising hydrogen and nitrogen, but is substantially free of hydrocarbons having two or more carbon atoms per molecule; and wherein the permeate fraction contains a higher mole percentage of hydrogen than the feed gas.

24. The use of claims 21 to 23, wherein the feed gas further comprises ammonia.

25. The use of claims 21 to 24 wherein the permeate fraction contains a higher mole percentage of ammonia than the feed gas.

26. The use of claims 21 to 25, wherein the feed gas comprises ammonia at a partial pressure of 448 kPa (65 psi) or less and is essentially free of water vapor.

27. The use of a cellulose acetate butyrate membrane obtained by the process of claims 1 - 20 in a process for separating ammonia plant purge gases which comprise hydrogen and nitrogen and ammonia, to separate the purge gas into a permeate fraction which is hydrogen-rich and a residual fraction which is depleted in hydrogen relative to the purge gas fed to the membrane.

28. The use of claim 27, wherein the purge gases are separated without pretreating them to remove ammonia gas.

29. The use of claim 28 wherein the partial pressure of ammonia is 448 kPa (65 psi) or less and is essentially free of water vapor.

30. The use of claims 27 to 29, wherein the ammonia plant feed gases are produced from reformed natural gas from which oxygen-containing by-products have been removed such that the purge gases comprise methane and are substantially free of hydrocarbons having two or more carbon atoms, and wherein the membrane is used to concentrate methane in a residual fraction for removal from the ammonia synthesis, and to recover a hydrogen-rich permeate fraction for reuse in ammonia synthesis.

31. The use of claim 30 wherein the purge gases fed to the membrane are essentially moisture-free, and wherein the permeate fraction is also relatively rich in ammonia.

## Patentansprüche

1. Verfahren zur Herstellung einer asymetrischen Membran, die zur Verwendung bei der Gastrennung geeignet ist, welches die Schritte umfaßt:
(a) Herstellen einer Gießlösung, die bezogen auf das Gewicht
(i) 10 % bis 30 % Celluloseacetatbutyratpolymer, das durch die Formel 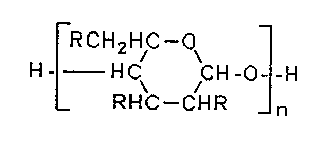 symbolisiert wird, worin jedes R des Polymers unabhängig aus der Gruppe ausgewählt ist, die aus -OH, -OOCCH₃, und -OOCCH₂CH₂CH₃ besteht, so daß der prozentuale Gewichtsanteil der -OCCH₂CH₂CH₃-Gruppen am Polymer 10 bis 45, der prozentuale Gewichtsanteil der -OCCH₃-Gruppen am Polymer 2 bis 35 und der prozentuale Gewichtsanteil der -OH-Gruppen am Polymer 0,8 bis 2 beträgt und worin n so gewählt ist, daß das Molekulargewicht-Zahlenmittel mindestens 20 000 beträgt,
(ii) 35 % bis 75 % Polymerlösungsmittel, das aus der Gruppe ausgewählt ist, die aus Aceton, Triethylphosphat, Dioxan und Mischungen daraus besteht, und
(iii) 2 % bis 40 % mindestens eines porenbildenden Mittels, das aus der Gruppe ausgewählt ist, die aus Formamid, Maleinsäure, n-Propanol, Glycerin, Ameisensäure, Pyridin und Wasser besteht,
enthält;
(b) Gießen der Membran durch Beschichten einer im wesentlichen flachen Trägeroberfläche mit einem Film der Gießlösung;
(c) Bilden einer dichten Schicht auf der freiliegenden Filmoberfläche durch Abdampfen des Polymerlösungsmittels in einer im wesentlichen trockenen Umgebung für 10 bis 80 Sekunden bei einer Temperatur von 15°C bis 35°C;
(d) Gelieren des Films bei einer Temperatur von 0°C bis 15°C;
(e) Waschen der resultierenden Membran mit einer wirksamen Menge einer Waschflüssigkeit, die zur weitgehenden Entfernung des restlichen Polymerlösungsmittels und porenbildenden Mittels von der Membran ausreicht; und
(f) Trocknen der Membran durch Lösungsmittelaustausch ohne Hitze, wobei die Membran vor dem Trocknen bei einer Temperatur von mindestens 65°C gehärtet wird.

2. Ein Verfahren nach Anspruch 1, worin der auf die Trägeroberfläche aufgebrachte Film der Gießlösung 203 bis 406 µm (8 bis 16 mils) dick ist.

3. Ein Verfahren gemäß den Ansprüchen 1 oder 2, worin die Waschflüssigkeit Wasser ist.

4. Ein Verfahren gemäß den Ansprüchen 1 bis 4, worin die Membran dadurch getrocknet wird, daß ein Alkohol verwendet wird, um das Wasser in der Membran auszutauschen, dann eine unpolare flüchtige Flüssigkeit verwendet wird, um den Alkohol auszutauschen und dann die flüchtige Flüssigkeit verdampft wird.

5. Ein Verfahren gemäß den Ansprüchen 1 bis 4, worin die Gießlösung filtriert wird oder für mindestens 4 Stunden ruhig stehengelassen wird, bevor sie auf die Trägeroberfläche aufgebracht wird.

6. Ein Verfahren gemäß den Ansprüchen 1 bis 5, worin das Celluloseacetatbutyrat ein Molekulargewicht-Zahlenmittel zwischen 40 000 und 250 000 aufweist.

7. Ein Verfahren gemäß den Ansprüchen 1 bis 6, worin der Butyrylgruppengehalt des Polymers 15 bis 40 Gew.-% beträgt.

8. Ein Verfahren gemäß den Ansprüchen 1 bis 7, worin der Acetylgruppengehalt des Polymers 10 bis 30 Gew.-% beträgt.

9. Ein Verfahren gemäß den Ansprüchen 1 bis 8, worin der Hydroxylgruppengehalt des Polymers 1,5 bis 1,8 Gew.-% beträgt.

10. Ein Verfahren gemäß den Ansprüchen 1 bis 9, worin das Polymerlösungsmittel Aceton ist.

11. Ein Verfahren gemäß den Ansprüchen 1 bis 10, worin das porenbildende Mittel aus einer Mischung aus Formamid und Maleinsäure mit einem Gewichtsverhältnis von Formamid zu Maleinsäure zwischen 4:1 und 1:1 besteht.

12. Ein Verfahren gemäß den Ansprüchen 1 bis 11, worin die Gießlösung im wesentlichen wasserfrei ist.

13. Ein Verfahren gemäß den Ansprüchen 1 bis 12, worin der Film durch Eintauchen in Wasser mit einer Temperatur von 2°C oder weniger geliert wird.

14. Ein Verfahren gemäß den Ansprüchen 1 bis 13, worin die Waschflüssigkeit Wasser ist und worin die Membran durch ein Lösungsmittelaustauschverfahren getrocknet wird, wobei ein Alkohol, der aus der Gruppe ausgewählt ist, die aus Methanol, Ethanol, Propanol und Butanol besteht, zum Austauschen des Wassers in der Membran verwendet wird, eine unpolare flüchtige Flüssigkeit, die aus der Gruppe ausgewählt ist, die aus Pentan, Hexan, Heptan, Benzol, Toluol und Schwefelkohlenstoff besteht, zum Austauschen des Alkohols verwendet wird und dann die flüchtige Flüssigkeit abgedampft wird.

15. Ein Verfahren gemäß den Anprüchen 1 bis 14, worin die Gießlösung im wesentlichen wasserfrei ist; und worin die Membran hergestellt wird, ohne den Gußfilm oder die Membran vor dem Trocknen Temperaturen von 50°C oder mehr auszusetzen.

16. Ein Verfahren gemäß Anspruch 15, worin das Polymerlösungsmittel Aceton ist; und worin das porenbildende Mittel aus Formamid, Maleinsäure und Mischungen daraus ausgewählt ist.

17. Ein Verfahren gemäß Anspruch 16, worin die Gießlösung im wesentlichen aus 16 bis 26 Gew.-% Celluloseacetatbutyrat, 40 bis 60 Gew.-% Aceton, 5 bis 25 Gew.-% Formamid und 5 bis 25 Gew.-% Maleinsäure besteht.

18. Ein Verfahren gemäß den Ansprüchen 1 bis 17, worin die Gießlösung aus 25 Gew.-% Celluloseacetatbutyrat, 47,5 Gew.-% Aceton, 19 Gew.-% Formamid und 9,5 Gew.-% Maleinsäure besteht.

19. Ein Verfahren gemäß den Ansprüchen 1 bis 18, worin das Celluloseacetatbutyratpolymer ein Molekulargewicht-Zahlenmittel zwischen 40 000 und 70 000 aufweist; worin der Gehalt an Butyrylgruppen des Polymers 15 bis 40 Gew.-% beträgt; und worin der Gehalt an Hydroxylgruppen des Polymers 1,5 bis 1,8 Gew.-% beträgt.

20. Ein Verfahren gemäß den Ansprüchen 1 bis 19, worin der Filmguß während der Herstellung der Membran durch Eintauchen in Wasser mit einer Temperatur von 2°C oder weniger geliert wird.

21. Verwendung einer Gastrennungsmembran, die nach einem Verfahren gemäß den Ansprüche 1 bis 20 erhalten wurde, in einem Gastrennungsprozeß zur Trennung eines Speisegasstroms, der eine Mischung von Gasen enthält, in eine Permeations-Gasfraktion, welche durch die Membran hindurchtritt und relativ reich an mindestens einem der Gase der Speisemischung ist, und einer Rückstandsfraktion, welche nicht durch die Membran hindurchtritt und die relativ reich an wenigstens einem anderem Gas der Speisemischung ist.

22. Eine Verwendung gemäß Anspruch 21, worin das Speisegas Wasserstoff und mindestens ein anderes Gas enthält und die Permeations-Fraktion einen höheren Molprozentsatz an Wasserstoff als das Speisegas enthält.

23. Eine Verwendung gemäß den Ansprüchen 21 oder 22, worin das Speisegas ein Spülgasstrom in einer Ammoniakanlage ist, der Wasserstoff und Stickstoff enthält aber im wesentlichen frei von Kohlenwasserstoffen ist, die zwei oder mehr Kohlenstoffatome pro Molekül aufweisen; und worin die Permeations-Fraktion einen höheren Molprozentsatz an Wasserstoff als das Speisegas enthält.

24. Eine Verwendung gemäß den Ansprüchen 21 bis 23, worin das Speisegas darüber hinaus Ammoniak enthält.

25. Eine Verwendung gemäß den Ansprüchen 21 bis 24, worin die Permeations-Fraktion einen höheren Molprozentsatz an Ammoniak als das Speisegas enthält.

26. Eine Verwendung gemäß den Ansprüchen 21 bis 25, worin das Speisegas Ammoniak mit einem Partialdruck von 448 kPa (65 psi) oder weniger enthält und im wesentlichen frei von Wasserdampf ist.

27. Die Verwendung einer Celluloseacetatbutyratmembran, die nach einem Verfahren gemäß den Ansprüchen 1 bis 20 erhalten wurde, in einem Verfahren zur Trennung von Spülgasen einer Ammoniakanlage, welche Wasserstoff und Stickstoff und Ammoniak enthalten, um das Spülgas in eine Permeations-Fraktion, welche wasserstoffreich ist, und eine Restfraktion zu trennen, welche relativ zum Spülgas, das der Membran zugeführt wurde, an Wasserstoff verarmt ist.

28. Eine Verwendung gemäß Anspruch 24, worin die Spülgase ohne Vorbehandlung getrennt werden, um Ammoniakgase zu entfernen.

29. Eine Verwendung gemäß Anspruch 28, worin der Partialdruck des Ammoniaks 448 kPa (65 psi) oder weniger beträgt und im wesentlichen frei von Wasserdampf ist.

30. Eine Verwendung gemäß den Ansprüchen 27 bis 29, worin die Spülgase der Ammoniakanlage aus reformiertem natürlichen Gas hergestellt sind, von welchem sauerstoffhaltige Nebenprodukte entfernt worden sind, so daß die Spülgase Methan enthalten und im wesentlichen frei von Kohlenwasserstoffen sind, die zwei oder mehr Kohlenstoffatome enthalten, und worin die Membran verwendet wird, um Methan zur Entfernung von der Ammoniaksynthese in einer Rückstandsfraktion zu konzentrieren und um eine wasserstoffreiche Permeations-Fraktion zur Wiederverwendung in der Ammoniaksynthese zurückzugewinnen.

31. Eine Verwendung gemäß Anspruch 30, worin die der Membran zugeleiteten Spülgase im wesentlichen feuchtigkeitsfrei sind, und worin die Permeations-Fraktion ebenfalls reich an Ammoniak ist.

## Revendications

1. Procédé de préparation d'une membrane asymétrique appropriée à une utilisation dans la séparation de gaz, qui comprend les étapes de :
(a) former une solution à couler comprenant, en poids (i) 10% à 30% d'un polymère de butyrate acétate de cellulose représenté par la formule : 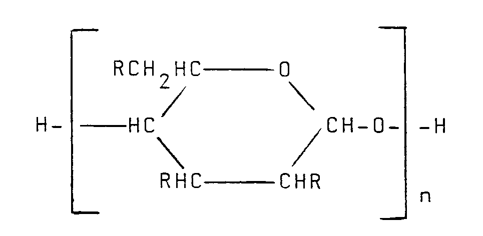 où chaque R dans le polymère est indépendamment choisi dans le groupe consistant en -OH, -OOCCH₃ et -OOCCH₂CH₂CH₃, de façon que le pourcentage pondéral des groupes -OCCH₂CH₂CH₃ dans le polymère soit de 10 à 45, que le pourcentage pondéral des groupes -OCCH₃ dans le polymère soit de 2 à 35 et que le pourcentage pondéral des groupes -OH dans le polymère soit de 0,8 à 2 et où n est choisi de façon que le poids moléculaire moyen en nombre du polymère soit d'au moins 20 000 ; (ii) 35% à 75% d'un solvant du polymère, choisi dans le groupe consistant en acétone, triéthylphosphate, dioxane et leurs mélanges ; et (iii) 2% à 40% d'au moins un agent porogène choisi dans le groupe consistant en formamide, acide maléique, n-propanol, glycérol, acide formique, pyridine et eau ;
(b) couler la membrane en enduisant une surface sensiblement plate de supporte d'un film de ladite solution à couler ;
(c) former une couche dense sur la surface exposée du film par évaporation du solvant du polymère dans un environnement sensiblement sec, pendant 10 à 80 secondes, à une température de 15°C à 35°C ;
(d) gélifier le film à une température de 0°C à 15°C;
(e) laver la membrane résultante avec une quantité efficace d'un liquide de lavage approprié à l'élimination sensible du solvant du polymère et de l'agent porogène qui restent, de la membrane ; et
(f) sécher la membrane par échange de solvants sans recuit à la chaleur de la membrane, à une température d'au moins 65°C avant séchage.

2. Procédé de la revendication 1, où le film de la solution à couler enduit sur la surface de support a 203 à 406 µm (8 à 16 millièmes de pouce) d'épaisseur.

3. Procédé des revendications 1 ou 2, où le liquide de lavage est de l'eau.

4. Procédé des revendications 1 à 4, où la membrane est séchée par le fait qu'un alcool est utilisé pour remplacer l'eau dans la membrane, un liquide volatil non polaire est alors utilisé pour remplacer l'alcool et le liquide volatil est alors soumis à évaporation.

5. Procédé des revendications 1 à 4, où la solution à couler est filtrée ou bien on la laisse reposer pendant au moins 4 heures avant de l'enduire sur la surface de support.

6. Procédé des revendications 1 à 5, où le butyrate acétate de cellulose a un poids moléculaire en nombre compris entre 40 000 et 250 000.

7. Procédé des revendications 1 à 6, où la teneur en groupe butyryle du polymère est de 15 à 40 pour cent en poids.

8. Procédé des revendications 1 à 7, où la teneur en groupe acétyle du polymère est de 10 à 30 pour cent en poids.

9. Procédé des revendications 1 à 8, où la teneur en groupe hydroxyle du polymère est de 1,5 à 1,8 pour cent en poids.

10. Procédé des revendications 1 à 9, où le solvant du polymère est l'acétone.

11. Procédé des revendications 1 à 10, où l'agent porogène provient d'un mélange de formamide et d'acide maléique à un rapport pondéral du formamide à l'acide maléique compris entre 4:1 et 1:1.

12. Procédé des revendications 1 à 11, où la solution à couler est sensiblement sans eau.

13. Procédé des revendications 1 à 12, où le film est gélifié par son immersion dans de l'eau ayant une température de 2°C ou moins.

14. Procédé des revendications 1 à 13, où le liquide de lavage est de l'eau et où la membrane est séchée par une technique d'échange de solvants où on utilise un alcool choisi dans le groupe consistant en méthanol, éthanol, propanol et butanol, pour remplacer l'eau dans la membrane, on utilise un liquide volatil non polaire choisi dans le groupe consistant en pentane, hexane, heptane, benzène, toluène et disulfure de carbone pour remplacer l'alcool et on soumet alors le liquide volatil à évaporation.

15. Procédé des revendications 1 à 14, où la solution à couler est sensiblement sans eau et où la membrane est préparée sans exposer le film coulé ni la membrane à des températures de 50°C ou au delà, avant séchage.

16. Procédé de la revendication 15, où le solvant du polymère est de l'acétone et où l'agent porogène est choisi parmi le formamide, l'acide maléique et leurs mélanges.

17. Procédé de la revendication 16, où la solution à couler se compose essentiellement de 16 à 26 pour cent en poids de butyrate acétate de cellulose, de 40 à 60 pour cent en poids d'acétone, de 5 à 25 pour cent en poids de formamide et de 5 à 25 pour cent en poids d'acide maléique.

18. Procédé des revendications 1 à 17, où la solution à couler se compose de 25 pour cent en poids de butyrate acétate de cellulose, de 47,5 pour cent en poids d'acétone, de 19 pour cent en poids de formamide et de 9,5 pour cent en poids d'acide maléique.

19. Procédé des revendications 1 à 18, où le polymère de butyrate acétate de cellulose a un poids moléculaire moyen en nombre compris entre 40 000 et 70 000; où la teneur en groupe butyryle du polymère est de 15 à 40 pour cent en poids et où la teneur en groupe hydroxyle du polymère est comprise entre 1,5 et 1,8 pour cent en poids.

20. Procédé des revendications 1 à 19, où le film coulé pendant la préparation de la membrane est gélifié par son immersion dans l'eau à une température de 2°C ou moins.

21. Utilisation d'une membrane de séparation de gaz obtenue par le procédé des revendications 1 à 20, dans un procédé de séparation de gaz pour la séparation d'un courant d'un gaz d'alimentation comprenant un mélange de gaz, en une fraction de perméat de gaz qui traverse la membrane et est relativement riche en au moins l'un des gaz du mélange d'alimentation et une fraction résiduelle qui ne traverse pas la membrane et qui est relativement riche en au moins un autre gaz du mélange d'alimentation.

22. Utilisation de la revendication 21, où le gaz d'alimentation comprend de l'hydrogène et au moins un autre gaz et la fraction du perméat contient un pourcentage en moles d'hydrogène plus important que le gaz d'alimentation.

23. Utilisation des revendications 21 ou 22, où le gaz d'alimentation est un courant de purge dans une installation d'ammoniac comprenant de l'hydrogène et de l'azote mais il est sensiblement exempt d'hydrocarbures ayant deux atomes de carbone ou plus par molécule ; et où la fraction du perméat contient un pourcentage en moles d'hydrogène plus important que le gaz d'alimentation.

24. Utilisation des revendications 21 à 23, où le gaz d'alimentation comprend de plus de l'ammoniac.

25. Utilisation des revendications 21 à 24, où la fraction du perméat contient un pourcentage en moles d'ammoniac plus important que le gaz d'alimentation.

26. Utilisation des revendications 21 à 25, où le gaz d'alimentation comprend de l'ammoniac à une pression partielle de 448 kPa (65 psi) ou moins et est essentiellement sans vapeur d'eau.

27. Utilisation d'une membrane en butyrate acétate de cellulose obtenue par le procédé des revendications 1-20 dans un procédé pour la séparation des gaz de purge d'une installation d'ammoniac qui comprend de l'hydrogène et de l'azote et de l'ammoniac, pour séparer le gaz de purge en une fraction de perméat qui est riche en hydrogène et une fraction résiduelle qui est épuisée en hydrogène relativement au gaz de purge fourni à la membrane.

28. Utilisation de la revendication 27, où les gaz de purge sont séparés sans prétraitement pour éliminer le gaz ammoniac.

29. Utilisation de la revendication 26, où la pression partielle de l'ammoniac est de 448 kPa (65 psi) ou moins et il ne contient essentiellement pas de vapeur d'eau.

30. Utilisation des revendications 27 à 29, où les gaz d'alimentation de l'installation d'ammoniac sont produits à partir de gaz naturel reformé d'où ont été éliminés les sous-produits contenant de l'oxygène de manière que les gaz de purge contiennent du méthane et soient sensiblement exempts d'hydrocarbures ayant deux atomes de carbone ou plus et où la membrane est utilisée pour concentrer le méthane en une fraction résiduelle pour élimination de la synthèse de l'ammoniac et pour récupérer une fraction d'un perméat riche en hydrogène pour une réutilisation dans la synthèse de l'ammoniac.

31. Utilisation de la revendication 30, où les gaz de purge fournis à la membrane sont essentiellement sans humidité et où la fraction du perméat est également relativement riche en ammoniac.
